(19) Europäisches Patentamt
European Patent Office
Office européen des brevets

(11) **EP 3 552 292 B1**

(12) **EUROPÄISCHE PATENTSCHRIFT**

(45) Veröffentlichungstag und Bekanntmachung des Hinweises auf die Patenterteilung:
**18.08.2021 Patentblatt 2021/33**

(21) Anmeldenummer: **18706204.7**

(22) Anmeldetag: **01.02.2018**

(51) Int Cl.:
*H02J 3/28* (2006.01)    *H02J 15/00* (2006.01)

(86) Internationale Anmeldenummer:
**PCT/EP2018/052555**

(87) Internationale Veröffentlichungsnummer:
**WO 2018/145998 (16.08.2018 Gazette 2018/33)**

(54) **ENERGIESPEICHERVORRICHTUNG UND DEREN VERWENDUNG**

ENERGY STORAGE APPARATUS AND USE THEREOF

SYSTÈME D'ACCUMULATION D'ÉNERGIE ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.02.2017 DE 102017202136**

(43) Veröffentlichungstag der Anmeldung:
**16.10.2019 Patentblatt 2019/42**

(73) Patentinhaber: **Siemens Aktiengesellschaft**
**80333 München (DE)**

(72) Erfinder:
• **BETZIN, Christopher**
**91301 Forchheim (DE)**
• **SCHRICKER, Barbara**
**91058 Erlangen (DE)**
• **WOLFSCHMIDT, Holger**
**91058 Erlangen (DE)**

(56) Entgegenhaltungen:
**WO-A1-2016/150815     US-A1- 2016 218 511**
**US-A1- 2016 334 821**

**Beschreibung**

Die Erfindung betrifft insbesondere eine flexible Steuereinheit für den optimierten Betrieb von Hybridspeichern.

Der Wunsch elektrische Energie zu speichern und zu einem späteren Zeitpunkt zu nutzen gewinnt nicht zuletzt durch die steigende Indikation von erneuerbaren Energieformen wie Sonne und Wind immer mehr an Bedeutung. Zur Speicherung von Energie gibt es mittlerweile eine große und ständig wachsende Anzahl an Lösungsansätzen. Diese lassen sich grob in mechanische, physikalische oder chemische /elektrochemische Speicher einteilen. Bekannte Beispiele sind Schwungräder, Pumpspeicherkraftwerke und verschiedene Akkumulatoren. Alle diese beschriebenen Speicher besitzen dabei sehr unterschiedliche technische Eigenschaften und technologiespezifische Vor- und Nachteile.

Typische Klassifizierungsmerkmale für Energiespeicher sind die Energie- und Leistungsdichte, die typische Entladezeit, der Temperaturbereich, indem die Speicher betrieben werden können, die Effizienz, die unter bestimmten Betriebsbedingungen zu erwartende Lebensdauer und nicht zuletzt die auf die Speicherkapazität bezogenen Investitionskosten.

WO 2016/150815 A1, US 2016/334821 A1 und US 2016/218511 A1 sind Dokumente zum Stand der Technik.

Es ist Aufgabe der Erfindung eine elektrische Energiespeichervorrichtung hinsichtlich bestimmter Kriterien, insbesondere hinsichtlich Lebensdauer, Effizienz, Energiedichte, Leistungsdichte, Entladungszeit, Kosten, einfach, flexibel und wirksam zu optimieren und zu verwenden.

Die Aufgabe wird durch eine Energiespeichervorrichtung gemäß dem Hauptanspruch 1 und eine Verwendung gemäß dem Nebenanspruch 7 gelöst.

Es ist erkannt worden, dass nicht jeder Energiespeicher für jede Anwendung gleichermaßen gut geeignet ist. Häufig gibt es Anwendungen, für die eine Kombination aus verschiedenen Speichern sinnvoll ist, um Vorteile zu kombinieren, Nachteile zu beseitigen oder einfach um spezielle Anforderungen überhaupt abdecken zu können. Lösungen in denen verschiedenartige Speicher zusammengeschaltet werden, werden als Hybridspeicher bezeichnet.

Technisch ergibt sich bei der Kombination verschiedenartiger Speicher zu Hybridspeichern die Fragestellung, wie die einzelnen Komponenten zu steuern sind, und wie das jeweilige geforderte Lastprofil auf die einzelnen Speicher sinnvoll zu verteilen ist.

In der Betriebsführung von Hybridspeichern steckt sehr viel Potential. Eine Aufteilung des Lastprofils in Teillastprofile und deren geschickte Zuordnung zu den einzelnen Speicherkomponenten kann Systemeigenschaften wie Effizienz, Lebensdauer, Vorhersagbarkeit und dadurch ebenso Investitionskosten und Betriebskosten in sehr starken Maße beeinflussen. Durch eine optimierte Betriebsführung lassen sich deshalb beachtliche Vorteile generieren.

Für eine geschickte Betriebsstrategie wird sehr viel Detailwissen der einzelnen Speicherkomponenten benötigt. Häufig verändern sich zudem Systemeigenschaften einzelner Speicher, abhängig von ihrem jeweiligen Betriebspunkt, wie es beispielsweise der Ladezustand und die Leistung sein können, und den vorherrschenden Betriebsbedingungen, wie es beispielsweise die Temperatur sein kann. Es gibt beispielsweise bei elektrochemischen Speichern Betriebsbereiche, die sich besonders ungünstig auf die Lebensdauer der Speicher auswirken können und Betriebsbereiche in denen die Speichersysteme eine verringerte Effizienz aufweisen.

Wenn es gelingt gezielt ungünstige Betriebsbereiche einzelner Speicherkomponenten zu vermeiden und durch andere Speicherkomponenten abdecken zu lassen, können für das Gesamtsystem deutliche Vorteile generiert werden, ohne die Gesamtfunktionalität des Speichers einschränken zu müssen.

Gemäß der Idee der vorliegenden Erfindung ergeben sich folgende Vorteile. Die Lebensdauer der einzelnen Energiespeichereinrichtungen kann erhöht werden. Die Effizienz der einzelnen Energiespeichereinrichtungen kann erhöht werden. Die Wartungskosten für die Energiespeichereinrichtungen können reduziert werden. Es können Einsparungen von Peripherie, wie es beispielsweise Kühlkomponenten sein können, ermöglicht werden. Ebenso können die Investitionskosten reduziert werden. Zudem ist das Kriterium, nachdem optimiert werden soll, wählbar. Neue Erkenntnisse zu den einzelnen Energiespeichereinrichtungen können durch aktualisieren der Bewertungsprofile einfach implementiert werden. Es ist eine aktive Steuerung des Gesamtsystems bzw. der Energiespeichervorrichtung möglich. Durch Vermeidung kritischer Betriebszustände kann eine Vorhersagegenauigkeit erhöht und eine Lebensdauerabschätzbarkeit verbessert werden.

Weitere vorteilhafte Ausgestaltungen werden mit den Unteransprüchen beansprucht.

Gemäß einer weiteren vorteilhaften Ausgestaltung kann ein jeweiliges Abbilden des Bewertungsprofils als eine Matrix oder als ein dreidimensionaler Graph geschaltet sein.

Gemäß einer weiteren vorteilhaften Ausgestaltung kann die Rechnereinrichtung die Bewertungsprofile mittels durch die Messeinrichtung erfasster Werte in Anzahl Umfang und / oder Detailierungsgrad erweitern.

Gemäß einer weiteren vorteilhaften Ausgestaltung können in die Datenspeichereinrichtung zusätzliche Bewertungsprofile eingespeichert werden.

Gemäß einer weiteren vorteilhaften Ausgestaltung können die Betriebszustandswerte der Energiespeichereinrichtungen Temperatur, Ladungszustand, Feuchte, Druck, Strahlungswerte, Kapazität und / oder Leistung sein.

Gemäß einer weiteren vorteilhaften Ausgestaltung können die jeweiligen Verhältnisse einer aktuellen Leistung zur Maximalleistung einer jeweiligen Energiespeichereinrichtung zu dem Verhältnis der aktuellen Leistung zu Maximalleistung der Energiespeichervorrichtung verschieden sein.

Gemäß einer weiteren vorteilhaften Ausgestaltung kann die Steuerungseinrichtung mittels eines Ist-Soll-Vergleichs als Reglungseinrichtung ausgeführt sein.

Die Erfindung wird anhand von Ausführungsbeispielen in Verbindung mit den Figuren näher beschrieben.

Es zeigen:

Figur 1    ein Ausführungsbeispiel einer erfindungsgemäßen Energiespeichervorrichtung ;

Figur 2    ein Ausführungsbeispiel eines erfindungsgemäßen Bewertungsprofils;

Figur 3    ein Ausführungsbeispiel einer erfindungsgemäßen Verwendung.

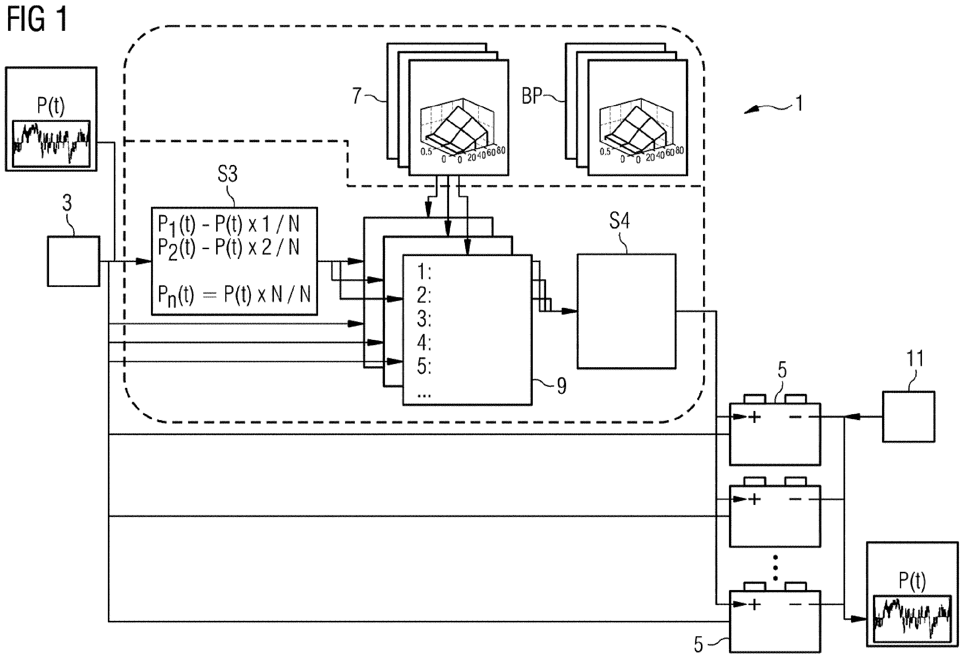

Figur 1 zeigt ein Ausführungsbeispiel einer erfindungsgemäßen Energiespeichervorrichtung 1. Die vorliegende Erfindung beschreibt ein Grundkonzept für eine flexible Steuerung mittels einer Steuereinrichtung 11 für eine flexible Steuerung, die es ermöglicht, den Betrieb von hybriden Energiespeichereinrichtungen 5 nach bestimmten wählbaren Gesichtspunkten zu optimieren. Basis für die Optimierung stellen als Bewertungsprofile BP gesammelte Erfahrungswerte der einzelnen Energiespeichereinrichtungen 5 dar. Eine bevorzugte Ausführungsform eines Bewertungsprofils BP ist eine Bewertungsmatrize. Das geforderte Lastprofil P(t) wird in Teillastprofile Pi(t) zerlegt und auf Basis der Bewertungsmatrizen, der aktuellen Betriebszustände der Energiespeichereinrichtungen 5 und einem Optimierungsverfahren auf die einzelnen Energiespeichereinrichtungen 5 verteilt. Das Optimierungsverfahren kann die Verteilung der Lastprofile nach verschiedenen einstellbaren Kriterien vornehmen. Zudem werden die Teillastprofile Pi(t) mit dem Gesamtlastprofil P(t) abgeglichen. Damit werden Abweichungen ermittelt und ihnen kann entgegengewirkt werden. Dies kann mittels eines Rückkopplungspfades ausgeführt sein. Die Funktionsweise des Konzeptes stellt Figur 1 dar.

Eingangssignale einer Rechnereinrichtung 9 sind die vom System geforderte Leistung P(t) und aktuelle Zustandsmeldungen oder Betriebszustandswerte der einzelnen Energiespeichereinrichtungen 5. Die Rechnereinrichtung 9 berechnet nun zunächst aus den geforderten Lastprofil P(t) unterschiedlich große Teillastprofile Pi(t). Anschließend wird für jedes dieser Teillastprofile Pi(t) geprüft, wie gut die einzelnen Energiespeichereinrichtungen 5 geeignet sind, das jeweilige Teillastprofil Pi(t) zu erfüllen. Die Analyse erfolgt basierend auf den jeweiligen von der Messeinrichtung 3 erfassten aktuellen Betriebszustandswerten der einzelnen Energiespeichereinrichtungen 5 und der für die jeweilige Energiespeichereinrichtung 5 in einer Datenspeichereinrichtung 7 hinterlegten Bewertungsmatrix als Ausführungsbeispiel für ein Bewertungsprofil BP. Die Optimierung ordnet die Teillastprofile Pi(t) den einzelnen Energiespeichereinrichtungen 5 derart zu, dass je nach dem eingestellten Kriterium das bestmögliche Ergebnis erzielt wird.

Es besteht die Möglichkeit, den Betrieb nach beliebigen Kriterien zu optimieren. Beispiel hierfür sind die Lebensdauer, die auf die gespeicherte Energiemenge bezogenen Kosten oder die Effizienz. Für die unterschiedlichen Aspekte werden in der Datenspeichereinrichtung 7 die entsprechenden Bewertungsprofile BP bzw. Bewertungsmatrizen hinterlegt.

Figur 1 zeigt eine schematische Darstellung einer Energiesparvorrichtung 1 mit eingehendem Lastprofil P(t), folgender Bewertungsalgorythmik und anschließender Profilzuweisung für jeden einzelnen Typ einer Energiespeichereinrichtung 5. Zusätzlich gibt es eine Rückkopplungsschleife, die den Abgleich von Teillastprofilen Pi(t) zu Komplettlastprofilen P(t) vollzieht, um Abweichungen zu erkennen und diesen entgegenzuwirken. Messeinrichtung 3, Datenspeichereinrichtung 7, Rechnereinrichtung 9 und Steuereinrichtung 11 können als eine Steuereinheit mit flexibler Optimierung zusammengefasst sein.

Eine erfindungsgemäße Energiespeichervorrichtung 1 kann auf eine lange Lebensdauer optimierte Betriebsführung eines Hybridspeichers, bestehend aus verschiedenen elektrochemischen Speichern ausgeführt sein. Eine erfindungsgemäße Energiespeichervorrichtung 1 kann als auf lange Lebensdauer optimierte Betriebsführung eines Hybridspeichers, bestehend aus elektrochemischen Speichern und nicht elektrochemischen Speichern ausgeführt sein. Eine Betriebsführung eines Hybridspeichers, bestehend aus elektrochemischen Speichern und nicht elektrochemischen Speichern kann auf Kosten beispielsweise Kosten pro Kilowattstunden gespeicherte Energie optimiert sein. Eine Betriebsführung eines Hybridspeichers, bestehend aus verschiedenen elektrochemischen Speichern kann beispielsweise auf den Wirkungsgrad optimiert sein. Eine Betriebsführung eines Hybridspeichers, bestehend aus elektrochemischen Speichern und nicht elektrochemischen Speichern kann auf den Wirkungsgrad hin optimiert sein. Die Betriebsweise eines Hybridspeichers kann durch Ausnutzen der vorteilhaften Bewertungsschemata und / oder durch Vermeidung der nachteiligen Bewertungsschemata optimiert sein. Mit Hilfe von Teillastprofilbewertungen ergibt sich eine Vorhersagemöglichkeit von günstigen Zeitpunkten für Wartungszyklen.

Folgende Hardwaremerkmale können darauf hinweisen, dass eine erfindungsgemäße Energiespeichervorrichtung 1 zur Steuerung eines Hybridspeichers bzw. eines Systems von verschiedenen Energiespeichereinrichtungen 5 eingesetzt wurde: Zwei oder mehrere verschiedenartige Energiespeichereinrichtungen 5 werden über eine gemeinsame Steuereinheit gesteuert. Das Lastprofil des Hybridspeicher wird typischerweise aus mehreren voneinander abweichenden Teil-Lastprofilen zusammengesetzt.

$$P(t) = \sum_{i=1}^{N} P_i(t)$$

$$P_1(t) \neq P_2(t) \neq ... \neq P_N(t)$$

Das Verhältnis von Leistung zu Maximalleistung der einzelnen Energiespeichereinrichtungen 5 zu dem des Gesamtspeichers ist unterschiedlich.

$$\frac{P(t)}{P_{\mathrm{max}}} \neq \frac{P_i(t)}{P_{i,\mathrm{max}}}$$

Die Steuereinheit enthält einen Baustein zur Datenspeicherung.

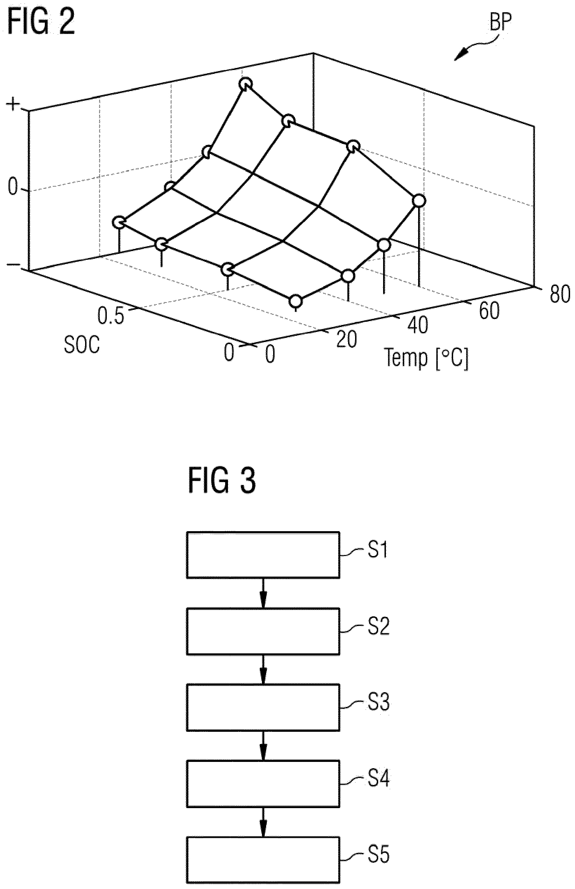

Figur 2 zeigt ein Ausführungsbeispiel eines erfindungsgemäßen Bewertungsprofiles BP. Erfindungsgemäß wird vorgeschlagen dass in einer Datenspeichereinrichtung 7 für jede einzelne Energiespeichereinrichtung 5 und jedes einstellbare Optimierungskriterium zugehörige Bewertungsmatrizen mit jeweiligen Parametern hinterlegt werden. Die Parameter können beispielsweise der Ladezustand SOC und die Temperatur T sein. Diese werden mittels einer Messeinrichtung 3 aus Messdaten ermittelt und können während des Betriebes kontinuierlich angepasst werden. Mit Hilfe der Bewertungsmatrizen ist aufgrund optimierter Betriebsführung eine genauere Altersabschätzung und somit eine genauere Vorhersage möglich.

Die Bewertungsmatrizen enthalten Informationen, wie sich bestimmte Betriebspunkte auf bestimmte Kriterien auswirken. Für jede Energiespeichereinrichtung 5 und jedes Kriterium gibt es eine zugehörige Bewertungsmatrix.

Anzahl, Umfang und Detailierungsgrad der Bewertungsmatrizen können mit zunehmendem Kenntnisstand erweitert werden. Ebenso können einfach weitere Bewertungsmatrizen hinzugefügt werden.

Figur 2 zeigt ein Beispiel für eine Bewertungsmatrix. Dabei ist eine gemessene kalendarische Alterung eines Lithium-Ionen-Speichers in Abhängigkeit des Ladezustandes SOC und der Temperatur T dargestellt. Damit zeigt Figur 2 als Beispiel für eine beschriebene Bewertungsmatrix den Einfluss des Ladezustand SOC (State of Charge) und der Temperatur T auf die kalendarische Alterung eines elektrochemischen Energiespeichers als Ausführungsbeispiel einer Energiespeichereinrichtung 5, basierend auf einzelnen Lithium-Ionen-Zellen einer bestimmten Zellchemie. Im dargestellten Beispiel findet die stärkste Alterung bei vollgeladenen Speicher im oberen Temperaturbereich statt. Durch Vermeidung dieses Betriebsbereiches kann die Alterung der Speicherkomponente bzw. der Energiespeichereinrichtung 5 gezielt reduziert werden.

Figur 3 zeigt ein Ausführungsbeispiel einer erfindungsgemäßen Verwendung einer Energiespeichervorrichtung. Mittels einer Messeinrichtung erfolgt ein Erfassen S1 eines bereitzustellenden elektrischen Lastprofils und von Betriebszustandswerten von Energiespeichereinrichtungen. Mit einem zweiten Schritt S2 wird ein Datenspeichern mindestens eines Auswirkungen von Betriebsparametern auf ein jeweiliges Kriterium einer jeweiligen Energiespeichereinrichtung abbildenden Bewertungsprofils für eine jeweilige Energiespeichereinrichtung ausgeführt. Mit einem dritten Schritt S3 erfolgt ein Einteilen des bereitzustellenden elektrischen Lastprofils in Teillastprofile. Mit einem vierten Schritt S4 erfolgt ein Zuordnen eines jeweiligen Teillastprofils zu einer jeweiligen besten Energiespeichereinrichtung hinsichtlich des geforderten Kriteriums unter Berücksichtigung des Betriebszustandswertes oder der Betriebszustandswerte der betroffenen Energiespeichereinrichtung. Mit einem fünften Schritt S5 erfolgt ein Ansteuern der mittels des Zuordnens S4 ausgewählten Energiespeichereinrichtungen zum gemeinsamen Bereitstellen elektrischer Leistung für das geforderte elektrische Lastprofil.

**Patentansprüche**

1. Energiespeichervorrichtung (1) zur Bereitstellung elektrischer Energie, aufweisend

   eine Messeinrichtung (3) zur Erfassung eines bereitzustellenden elektrischen Lastprofils und von Betriebszustandswerten von elektrochemischen Energiespeichereinrichtungen (5);

   eine Datenspeichereinrichtung (7) zur Datenspeicherung mindestens eines Auswirkungen von Betriebsparametern auf ein jeweiliges Kriterium einer jeweiligen elektrochemischen Energiespeichereinrichtung abbildenden Bewertungsprofils (BP) für eine jeweilige elektrochemische Energiespeichereinrichtung (5) ;

   eine Rechnereinrichtung (9) zur Einteilung des bereitzustellenden elektrischen Lastprofils in Teillastprofile und deren Zuordnung zu einer jeweiligen besten elektrochemischen Energiespeichereinrichtung hinsichtlich des jeweiligen Kriteriums unter Berücksichtigung deren Betriebszustandswerte;

   eine Steuereinrichtung (11) zur Ansteuerung der mittels der Zuordnung ausgewählten elektrochemischen Energiespeichereinrichtungen (5) zur gemeinsamen Bereitstellung elektrischer Leistung für das elektrische Lastprofil, **dadurch gekennzeichnet, dass**

   die Kriterien Energiedichte und/oder Leistungsdichte sind und, dass

   die jeweiligen Verhältnisse einer aktuellen Leistung zur Maximalleistung einer jeweiligen elektrochemischen Energiespeichereinrichtung zu dem Verhältnis der aktuellen Leistung zur Maximalleistung der Energiespeichervorrichtung verschieden sind.

2. Energiespeichervorrichtung gemäß Anspruch 1, **dadurch gekennzeichnet, dass**
ein jeweiliges abbildendes Bewertungsprofil als eine Matrix oder als ein dreidimensionaler Graph erzeugt ist.

3. Energiespeichervorrichtung gemäß einem der vorangehenden Ansprüche, **dadurch gekennzeichnet, dass**
die Rechnereinrichtung die Bewertungsprofile mittels durch die Messeinrichtung erfasster Werte in Anzahl, Umfang und/oder Detaillierungsgrad erweitert.

4. Energiespeichervorrichtung gemäß einem der vorangehenden Ansprüche, **dadurch gekennzeichnet, dass**
in die Datenspeichereinrichtung zusätzliche Bewertungsprofile eingespeichert sind.

5. Energiespeichervorrichtung gemäß einem der vorangehenden Ansprüche, **dadurch gekennzeichnet, dass**
die Betriebszustandswerte Temperatur, Ladungszustand, Feuchte, Druck, Strahlungswerte, Kapazität und/oder Leistung sind.

6. Energiespeichervorrichtung gemäß einem der vorangehenden Ansprüche, **dadurch gekennzeichnet, dass**
die Steuerungseinrichtung mittels eines Ist-Soll-Vergleichs als Regelungseinrichtung ausgeführt ist.

7. Verwendung einer Energiespeichervorrichtung gemäß den Ansprüchen 1 bis 6 zum Bereitstellen elektrischer Energie, mit den Schritten
mittels einer Messeinrichtung ausgeführtes Erfassen (S1) eines bereitzustellenden elektrischen Lastprofils und von Betriebszustandswerten von elektrochemischen Energiespeichereinrichtungen;
mittels einer Datenspeichereinrichtung ausgeführtes Datenspeichern (S2) mindestens eines Auswirkungen von Betriebsparametern auf ein jeweiliges Kriterium einer jeweiligen elektrochemischen Energiespeichereinrichtung abbildenden Bewertungsprofils für eine jeweilige elektrochemische Energiespeichereinrichtung;
mittels einer Rechnereinrichtung ausgeführtes Einteilen (S3) des bereitzustellenden elektrischen Lastprofils in Teillastprofile und deren Zuordnen (S4) zu einer jeweiligen besten elektrochemischen Energiespeichereinrichtung hinsichtlich des jeweiligen Kriteriums unter Berücksichtigung deren Betriebszustandswerte;
mittels einer Steuereinrichtung ausgeführtes Ansteuern (S5) der mittels des Zuordnens ausgewählten elektrochemischen Energiespeichereinrichtungen zum gemeinsamen Bereitstellen elektrischer Leistung für das elektrische Lastprofil, **dadurch gekennzeichnet, dass**
die Kriterien Energiedichte, Leistungsdichte und/oder Entladungszeit sind und, dass
die jeweiligen Verhältnisse einer aktuellen Leistung zur Maximalleistung einer jeweiligen elektrochemischen Energiespeichereinrichtung zu dem Verhältnis der aktuellen Leistung zur Maximalleistung der Energiespeichervorrichtung verschieden sind.

8. Verwendung gemäß Anspruch 7, **dadurch gekennzeichnet, dass**
mittels der Rechnereinrichtung die Bewertungsprofile mittels durch die Messeinrichtung erfasster Werte in Anzahl, Umfang und/oder Detaillierungsgrad erweitert werden.

9. Verwendung gemäß Anspruch 7 oder 8, **dadurch gekennzeichnet, dass**
in die Datenspeichereinrichtung zusätzliche Bewertungsprofile eingespeichert werden.

10. Verwendung gemäß einem der vorherigen Ansprüche 7 bis 9, **dadurch gekennzeichnet, dass**
die Steuerungseinrichtung mittels eines Ist-Soll-Vergleichs regelt.

**Claims**

1. Energy storage apparatus (1) for providing electrical energy, having
a measuring device (3) for capturing an electrical load profile to be provided and operating state values of electrochemical energy storage devices (5);
a data storage device (7) for storing data relating to at least one assessment profile (BP) for a respective electrochemical energy storage device (5), which assessment profile represents effects of operating parameters on a respective criterion of a respective electrochemical energy storage device;
a computer device (9) for dividing the electrical load profile to be provided into partial load profiles and for assigning them to a respective best electrochemical energy storage device with regard to the respective criterion taking into account its operating state values;
an open-loop control device (11) for controlling the electrochemical energy storage devices (5) selected by means of the assignment to jointly provide electrical power for the electrical load profile, **characterized in that**
the criteria are energy density and/or power density, and **in that**
the respective ratios of a current power to the maximum power of a respective electrochemical energy storage device to the ratio of the current power to the maximum power of the energy storage apparatus are different.

2. Energy storage apparatus according to Claim 1, **characterized in that** a respective representing assessment profile is generated in the form of a matrix or a three-dimensional graph.

3. Energy storage apparatus according to one of the preceding claims, **characterized in that** the computer device expands the assessment profiles in terms of number, scope and/or degree of detail using values captured by the measuring device.

4. Energy storage apparatus according to one of the preceding claims, **characterized in that** additional assessment profiles are stored in the data storage device.

5. Energy storage apparatus according to one of the preceding claims, **characterized in that** the operating state values are temperature, state of charge, humidity, pressure, radiation values, capacity and/or power.

6. Energy storage apparatus according to one of the preceding claims, **characterized in that** the open-loop control device is designed as a closed-loop control device by means of an actual/desired comparison.

7. Use of an energy storage apparatus according to Claims 1 to 6 to provide electrical energy, having the following steps capturing (S1), by means of a measuring device, an electrical load profile to be provided and operating state values of electrochemical energy storage devices; storing data (S2) relating to at least one assessment profile for a respective electrochemical energy storage device, by means of a data storage device, which assessment profile represents effects of operating parameters on a respective criterion of a respective electrochemical energy storage device; dividing (S3) the electrical load profile to be provided into partial load profiles and assigning (S4) them to a respective best electrochemical energy storage device with respect to the respective criterion taking into account its operating state values by means of a computer device; controlling (S5), by means of an open-loop control device, the electrochemical energy storage devices selected by means of the assignment to jointly provide electrical power for the electrical load profile, **characterized in that** the criteria are energy density, power density and/or discharge time, and **in that** the respective ratios of a current power to the maximum power of a respective electrochemical energy storage device to the ratio of the current power to the maximum power of the energy storage apparatus are different.

8. Use according to Claim 7, **characterized in that** the assessment profiles are expanded in terms of number, scope and/or degree of detail by means of the computer device using values captured by the measuring device.

9. Use according to Claim 7 or 8, **characterized in that** additional assessment profiles are stored in the data storage device.

10. Use according to one of the preceding Claims 7 to 9, **characterized in that** the open-loop control device carries out closed-loop control by means of an actual/desired comparison.

**Revendications**

1. Système (1) d'accumulation d'énergie pour disposer d'énergie électrique, comportant un dispositif (3) de mesure pour détecter un profil de charge électrique à mettre à disposition et de valeurs d'état de fonctionnement de dispositifs (5) d'accumulation d'énergie électrochimiques ; un dispositif (7) de mise en mémoire de données pour mettre en mémoire des données d'au moins un profil (BP) d'évaluation, représentatif des effets de paramètre de fonctionnement sur un critère respectif d'un dispositif respectif d'accumulation d'énergie électrochimique, pour un dispositif (5) respectif d'accumulation d'énergie électrochimique ; un dispositif (9) informatique pour subdiviser le profil de charge électrique à mettre à disposition en des profils de charge partiels et pour leur association à un dispositif respectif d'accumulation d'énergie électrochimique le meilleur en ce qui concerne le critère respectif en tenant compte de leurs valeurs d'état de fonctionnement ; un dispositif (11) de commande pour la commande des dispositifs (5) d'accumulation d'énergie électrochimiques choisis au moyen de l'association pour la mise à disposition commune de puissance électrique pour le profil de charge électrique, **caractérisé en ce que** les critères sont la densité d'énergie et/ou la densité de puissance et **en ce que** les rapports respectifs d'une puissance en cours à la puissance maximum d'un dispositif respectif d'accumulation d'énergie sont différents du rapport de la puissance en cours à la puissance maximum du système d'accumulation d'énergie.

2. Système d'accumulation d'énergie suivant la revendication 1, **caractérisé en ce que**
un profil d'évaluation respectif représentatif est produit sous la forme d'une matrice ou d'un graphe en trois dimensions.

3. Système d'accumulation d'énergie suivant l'une des revendications précédentes,
**caractérisé en ce que**
le dispositif informatique étend en nombre, en extension et/ou en degré de détail les profils d'évaluation au moyen de valeurs détectées par le dispositif de mesure.

4. Système d'accumulation d'énergie suivant l'une des revendications précédentes,
**caractérisé en ce que**
des profils d'évaluation supplémentaires sont mis en mémoire dans le dispositif de mis en mémoire de données.

5. Système d'accumulation d'énergie suivant l'une des revendications précédentes,
**caractérisé en ce que**
les valeurs d'état de fonctionnement sont la température, l'état de charge, l'humidité, la pression, des valeurs de rayonnement, la capacité et/ou la puissance.

6. Système d'accumulation d'énergie suivant l'une des revendications précédentes,
**caractérisé en ce que**
le dispositif de commande est réalisé en dispositif de régulation au moyen d'une comparaison réelle-consigne.

7. Utilisation d'un système d'accumulation d'énergie suivant les revendications 1 à 6 pour disposer d'énergie électrique comprenant les stades
détection (S1), réalisée au moyen d'un dispositif de mesure, d'un profil de charge électrique à mettre à disposition et de valeurs d'état de fonctionnement de dispositifs d'accumulation d'énergie électrochimiques ;
mise en mémoire (S2) de données, réalisée au moyen d'un dispositif de mise en mémoire de données, d'au moins un profil d'évaluation représentatif d'effets de paramètre de fonctionnement sur un critère respectif d'un dispositif respectif d'accumulation d'énergie électrochimique pour un dispositif respectif d'accumulation d'énergie électrochimique ; subdivision (S3), réalisée au moyen d'un dispositif informatique, du profil de charge électrique à mettre à disposition en des profils de charge partiels et leur association (S4) à un dispositif respectif d'accumulation d'énergie électrochimique le meilleur au regard du critère respectif en tenant compte des valeurs d'état de fonctionnement; commande (S5), réalisée au moyen d'un dispositif de commande, des dispositifs d'accumulation d'énergie électrochimiques choisis au moyen de l'association pour la mise à disposition commune de puissance électrique pour le profil de charge électrique, **caractérisée en ce que**
les critères sont la densité d'énergie et/ou la densité de puissance et **en ce que**
les rapports respectifs d'une puissance en cours à la puissance maximum d'un dispositif respectif d'accumulation d'énergie sont différents du rapport de la puissance en cours à la puissance maximum du système d'accumulation d'énergie.

8. Utilisation suivant la revendication 7, **caractérisée en ce que**,
au moyen du dispositif informatique, on étend en nombre, en extension et/ou en degré de détail les profils d'évaluation au moyen de valeurs détectées par le dispositif de mesure.

9. Utilisation suivant la revendication 7 ou 8, **caractérisée en ce que**
on met en mémoire des profils d'évaluation supplémentaires dans le dispositif de mise en mémoire de données.

10. Utilisation suivant l'une des revendications 7 à 9 précédentes, **caractérisée en ce que**
le dispositif de commande régule au moyen d'une comparaison réelle-consigne.

FIG 1

## FIG 2

## FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016150815 A1
- US 2016334821 A1
- US 2016218511 A1